# EUROPEAN PATENT APPLICATION

(11) **EP 4 656 460 A1**
(43) Date of publication of application: **03.12.2025**
(21) Application number: 25169828.8
(22) Date of filing: 10.04.2025
(51) Int. Cl.: B60R 1/072

(54) **ADJUSTING CONNECTED MIRRORS AND CAMERA ANGLES BASED ON ADJUSTMENTS OF A SEAT OR MIRRORS**

(30) Priority: 31.05.2024 US 202418679664
(71) Applicant: Volvo Car Corporation, 405 31 Göteborg (SE)
(72) Inventor: OVERESCH, Johannes, 405 31 Göteborg (SE); BOURGOIN, Denis, 405 31 Göteborg (SE); CARLSSON, Jonas, 405 31 Göteborg (SE)
(74) Representative: Nederlandsch Octrooibureau

(57) **Abstract**

A vehicle (202) that automatically adjusting mirrors (210, 212) and perception sensors (304, 308, 312, 316). The vehicle (202) includes a driver's seat (104), and mirrors (210, 212) and perception sensors (304, 308, 312, 316, 502, 506, 710) that provide visual driving assistance to a driver (204) occupying the driver's seat (104). A system (302) includes one or more processors (1002) and logic encoded in one or more non-transitory computer-readable storage media for execution by the one or more processors (1002) and when executed operable to cause the one or more processors (1002) to perform operations including detecting an adjustment to a position of the driver (204), and adjusting the mirrors (210, 212) and the perception sensors (304, 308, 312, 316) in response to the adjustment to the position of the driver (204).

## Description

### INTRODUCTION

The present disclosure relates generally to the automotive fields. When a driver gets into a vehicle to drive, the driver typically adjusts the driver's seat, as needed. However, after the driver's seat is adjusted, one or more of the mirrors such as the rear view mirror and the side mirrors become out of sync with the driver's seat position and thus need adjusting. The driver needs to then adjust the rear view mirror and the side mirrors.

The present introduction is provided as background context only and is not intended to be limiting in any manner. It will be readily apparent to those of ordinary skill in the art that the concepts and principles of the present disclosure may be implemented in other applications and contexts equally.

### SUMMARY

The present disclosure relates to a system for adjusting mirrors and perception sensors of a vehicle. As described in more detail herein, embodiments enable a system of a vehicle to detect an adjustment to a position of the driver. In response to the adjustment to the position of the driver, embodiments automatically adjust the mirrors and the perception sensors of the vehicle.

In one illustrative embodiment, the present disclosure provides a vehicle including a driver's seat and mirrors and perception sensors that provide visual driving assistance to a driver occupying the driver's seat. The vehicle also includes a system including one or more processors and logic encoded in one or more non-transitory computer-readable storage media for execution by the one or more processors. The logic when executed is operable to cause the one or more processors to perform operations including: detecting an adjustment to a position of the driver; and adjusting the mirrors and the perception sensors in response to the adjustment to the position of the driver. Optionally, in some embodiments, the logic when executed is further operable to cause the one or more processors to perform operations including: detecting an adjustment to the position of the driver's seat; and adjusting the mirrors and the perception sensors in response to the adjustment to the position of the driver's seat. In some embodiments, the logic when executed is further operable to cause the one or more processors to perform operations including detecting positions of eyes of the driver, where the detecting of the adjustment to a position of the driver is based on the positions of eyes of the driver. In some embodiments, one or more of the perception sensors captures images of an external environment. In some embodiments, one or more of the perception sensors captures images of eyes of the driver. In some embodiments, the logic when executed is further operable to cause the one or more processors to perform operations including: detecting an adjustment to at least one mirror of the mirrors; and adjusting the other mirrors of the mirrors and the perception sensors in response to the adjustment to the at least one mirror. In some embodiments, the logic when executed is further operable to cause the one or more processors to perform operations including detecting a gaze of eyes of the driver, where the adjusting of the mirrors and the perception sensors is based on the gaze of eyes of the driver.

In another illustrative embodiment, the present disclosure provides a mirror assembly for a vehicle. the mirror assembly includes mirrors that provide visual driving assistance to a driver occupying a driver's seat of the vehicle. The mirror assembly also includes a system including one or more processors and logic encoded in one or more non-transitory computer-readable storage media for execution by the one or more processors. The logic when executed is operable to cause the one or more processors to perform operations including: detecting an adjustment to a position of the driver; and adjusting the mirrors in response to the adjustment to the position of the driver. Optionally, in some embodiments, the logic when executed is further operable to cause the one or more processors to perform operations including: detecting an adjustment to the position of the driver's seat; and adjusting the mirrors and the perception sensors in response to the adjustment to the position of the driver's seat. In some embodiments, the logic when executed is further operable to cause the one or more processors to perform operations including detecting positions of eyes of the driver, where the detecting of the adjustment to a position of the driver is based on the positions of eyes of the driver. In some embodiments, one or more of the perception sensors captures images of an external environment. In some embodiments, one or more of the perception sensors captures images of eyes of the driver. In some embodiments, the logic when executed is further operable to cause the one or more processors to perform operations including: detecting an adjustment to at least one mirror of the mirrors; and adjusting the other mirrors of the mirrors and the perception sensors in response to the adjustment to the at least one mirror. In some embodiments, the logic when executed is further operable to cause the one or more processors to perform operations including detecting a gaze of eyes of the driver, where the adjusting of the mirrors and the perception sensors is based on the gaze of eyes of the driver.

In a further illustrative embodiment, the present disclosure provides a computer-implemented method for adjusting mirrors and perception sensors of a vehicle, the method including: detecting an adjustment to a position of a driver occupying a driver's seat of the vehicle; and adjusting the mirrors and the perception sensors in response to the adjustment to the position of the driver. Optionally, the method further includes: detecting an adjustment to the position of the driver's seat; and adjusting the mirrors and the perception sensors in response to the adjustment to the position of the driver's seat. In some embodiments, the method further includes detecting positions of eyes of the driver, where the detecting of the adjustment to a position of the driver is based on the positions of eyes of the driver. In some embodiments, one or more of the perception sensors captures images of an external environment. In some embodiments, one or more of the perception sensors captures images of eyes of the driver. In some embodiments, the method further includes detecting an adjustment to at least one mirror of the mirrors; and adjusting the other mirrors of the mirrors and the perception sensors in response to the adjustment to the at least one mirror.

### BRIEF DESCRIPTION OF THE DRAWINGS

The present disclosure is illustrated and described with reference to the various drawings, in which like reference numbers are used to denote like assembly components and/or method steps, as appropriate.
FIG. 1 is a block diagram of an example environment showing a perspective view from the interior of a vehicle and a portion of the external environment.
FIG. 2 is a side-view block diagram of an example environment of the interior of a vehicle.
FIG. 3 is a side-view block diagram of an example environment including a vehicle.
FIG. 4 is a flow chart for adjusting mirrors and perception sensors of a vehicle.
FIG. 5 is a side-view block diagram of an example environment of the interior of a vehicle.
FIG. 6 is a flow chart for adjusting mirrors and perception sensors of a vehicle.
FIG. 7 is a block diagram of an environment, showing a perspective toward the front of a vehicle.
FIG. 8 is a block diagram of an example high-level architecture for adjusting mirrors and perception sensors of a vehicle.
FIG. 9 is a block diagram of an example network environment of the present disclosure.
FIG. 10 is a block diagram of an example computing system of the present disclosure.

### DETAILED DESCRIPTION

Embodiments described herein automatically adjust mirrors and perception sensors of a vehicle based on the position of the driver in the vehicle. As described in more detail herein, in various embodiments, a vehicle includes mirrors and perception sensors that provide visual driving assistance to a driver while seated in the driver's seat and while driving the vehicle. A system of the vehicle detects an adjustment to the position of a driver seated in the driver's seat. In response to the adjustment to the position of the driver and to the new vantage point of the driver, the system adjusts the mirrors and the perception sensors of the vehicle. If the system detects an adjustment to at least one of the mirrors such as the rear view mirror, the system adjusts the other mirrors and the perception sensors in response to that adjustment to the mirror. In other words, in response to a manual adjustment performed by the driver, the system automatically adjusts the rest of the mirrors and the perception sensors without further adjustment action by the driver. These automatic adjustments by the system provide the driver of the vehicle with optimal viewing capability of the external environment. In various embodiments, the system utilizes any suitable artificial intelligence (AI) model, including AI, machine learning, and computer vision techniques to track changes to the driver's seat and the driver's vantage point, and adjusts the positions of the mirrors and the perception sensors to appropriate angles to an optimal vantage point for the driver.

In an example use case, when the driver sits in the driver's seat and adjusts the seat and/or looks into the rear view mirror adjusts the view of the rear view mirror to a preferred view, the system thereafter automatically makes adjustments to all of rest of the mirrors that the driver did not manually adjust. The system also makes adjustments to the perception sensors. The system uses the AI model and driver's profile to automatically adjust the mirrors and perception sensors without further user action from the driver. The system enables the driver to make further adjustments thereafter as desired by the driver. The system continually makes automatic adjustments as needed to fine tune the mirrors and perception sensors and also to learn the driver's preferences.

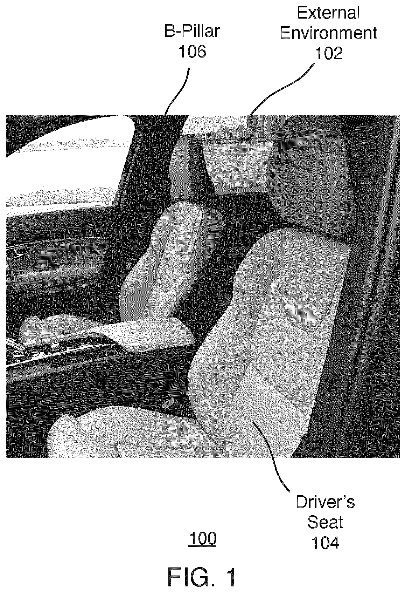

FIG. 1 is a block diagram of an example environment 100 showing a perspective view from the interior of a vehicle and a portion of the external environment 102. As shown, the view of the external environment 102 is shown from the general perspective of the driver's seat 104. Also, the view of the external environment 102 is visible through the side windows of the vehicle and through other windows not shown, but is visibly obstructed by various portions of the vehicle such as a B-pillar 106.

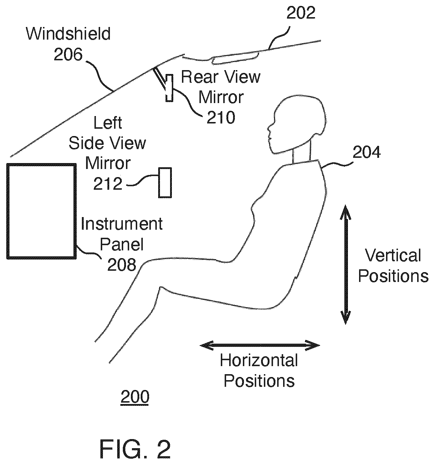

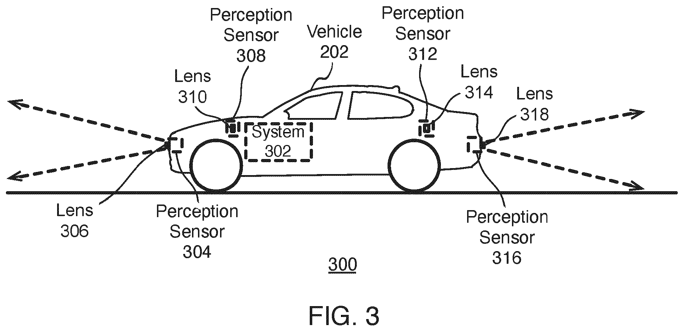

To visually assist a driver in viewing the external environment 102 while driving, the vehicle is equipped with a rear view mirror and side view mirrors (FIG. 2) that enable the driver to see the external environment 102 in the rearward direction. In various embodiments, the vehicle is also equipped with perception sensors (FIG. 3) such as cameras that enhance the driver' ability to see the external environment 102 in multiple directions. In various embodiments, these directions may include the rearward direction, forward direction, and the sideward directions, for example. As described in more detail herein, embodiments provide automatic adjustments of the mirrors and perception sensors with minimal driver intervention.

FIG. 2 is a side-view block diagram of an example environment 200 of the interior of a vehicle 204. Shown is a driver 204 in a seated position facing toward a windshield 206 and an instrument panel 208. As indicated herein, a rear view mirror 210 and side view mirrors such as left side view mirror 212 (right side view mirror not shown) visually assist the driver 204 in viewing the external environment 102 in the rearward direction. These mirrors visually enhance the driver's vantage point thereby enabling the driver to better see surrounding vehicles while driving on the road, as well as enabling the driver to better see obstacles such as other vehicles, people, etc. while the driver backs up the vehicle.

The vehicle 202 enables the driver 204 to change positions with the driver's seat (FIG. 1) moving the seat up or down to different vertical positions and/or frontward and backward to different horizontal positions and/or any combination thereof. The driver typically manually adjusts the seat and thereby his or her position using electronic controls. Such controls may be located, for example, on the side of the seat, on a key fob or other device, etc.

In some embodiments, the vehicle 202 may also store preferred seat position settings for different drivers of the vehicle 202. As such, a driver may press a button (e.g., on the door adjacent to the seat, etc.), where the button corresponds to a preferred seat position. A system of the vehicle 202 then adjusts the seat position accordingly. In some embodiments, the driver may change the position of the seat using voice commands or may select preferred stored seat positions using voice commands.

As described in more detail herein, embodiments provide automatic adjustments of the mirrors and perception sensors with minimal driver intervention, where the system of the vehicle 202 automatically adjusts the mirrors and perception sensors based on the position of the driver 204 in the vehicle 202. For example, if the position of the driver 204 moves upward and/or forward, the system causes the rear view mirror and the side view mirrors to tilt and/or angle in appropriate directions in order accommodate the new position and vantage point of the driver. Conversely, if the position of the driver 204 moves downward and/or backward, the system causes the rear view mirror and the side view mirrors to tilt and/or angle in the appropriate direction in order accommodate the new position and vantage point of the driver. As indicated herein, the system utilizes a suitable AI model to adjust the mirrors as well as adjust the perception sensors in order maximize the vantage point of the driver while driving normally in the forward direction or backing up the vehicle in the rearward direction. Example embodiments directed to perception sensors of the vehicle are described in more detail herein in connection with FIG. 3, for example.

FIG. 3 is a side-view block diagram of an example environment 300 including the vehicle 202 of FIG 2. As shown, the vehicle 202 includes a system 302 that controls a rear view mirror (FIG. 2) and side view mirrors (FIG. 2). In various embodiments, the vehicle is also equipped with perception sensors that enhance or extend the driver's ability to see the external environment 102 in multiple directions such as the rearward direction, forward direction, and the sideward directions.

In various embodiments, the system 302 also controls these various perception sensors positioned around the exterior of the vehicle 202. Being positioned at the exterior portion of the vehicle 104 means that at least one portion of the perception sensors (e.g., their respective lenses) are exposed to the environment 300, or external environment 300. In some embodiments, one or more perception sensors may be positioned inside the vehicle with a view of the external environment 300 through one or more windows, etc. Different example perception sensors are described in more detail below.

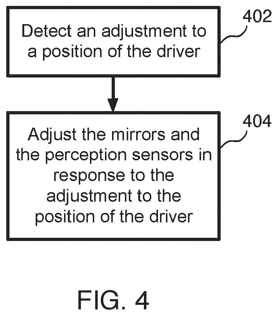

As described in more detail herein, an assembly of mirrors and perception sensors provide visual driving assistance to a driver occupying the driver's seat while driving the vehicle. The system 302 detects adjustments to the position of the driver, and automatically adjusts the mirrors and the perception sensors in response to the adjustments to the position of the driver. Example embodiments of the system 302 making adjustments to the mirrors and to the perception sensors in response to the adjustments to the position of the driver are described in more detail below in connection with FIG. 4.

In various embodiments, the system 302 controls a rear view mirror (FIG. 2) side view mirrors (FIG. 2) to adjust their angles for optimal viewing by the driver of the external environment. Such adjustments may apply to scenarios where the vehicle is traveling the forward direction or while the driver is backing up the vehicle. As described in more detail herein, embodiments provide automatic adjustments of the mirrors and perception sensors with minimal driver intervention.

As indicated above, perception sensors are positioned at various locations around the exterior of the vehicle 202. For example, a perception sensor 304 having a lens 306 is positioned at the front of the vehicle 202 (e.g., on the bumper or grill). A perception sensor 308 having a lens 310 is positioned at the left side of the vehicle 202. Another perception sensor 312 having a lens 314 is also positioned at the left side of the vehicle 202. There are other perception sensors (not shown) positioned at the right side of the vehicle 202. A perception sensor 316 having a lens 318 is positioned at the rear of the vehicle 202 (e.g., on the bumper or above the bumper).

The actual number of perception sensors positioned on the vehicle 202 may vary, depending on the particular implementation. Also, the positions of the perception sensors on the vehicle 202 may vary, depending on the particular implementation. For example, one or more perception sensors maybe positioned or mounted on the roof of the vehicle 202, underneath the vehicle 202, etc. In various embodiments, one or more perception sensors may be positioned at interior portions of the vehicle. For example, as indicated above, one or more of the perception sensors may be positioned inside the vehicle with views through one or more windows (e.g., behind the front windshield, near the rear-view mirror, etc.). As such, the perception sensors capture various types vantage points as well as various types of data associated with the external environment 100. Such data may include objects such as other vehicles, people, etc., weather elements such as rain, snow, etc. The system may communicate information such as warnings associated such data to the driver via the infotainment system. Such information may be conveyed visually and/or auditorily, depending on the particular implementation.

In various embodiments, the system 302 may utilize multiple types of perception sensors to capture data on the external environment 300. Any sensing methodology may be used, and the particular sensing methodology will depend on the particular implementation. For example, in various embodiments, one or more perception sensors may include one or more image sensing perception sensors or cameras, radar detectors, light detection and ranging (Lidar) cameras, and/or ultrasonic cameras, or any combination thereof. The system may utilize image sensing perception sensors or cameras and/or infrared (IR) perception sensors or cameras and/or radar perception sensors or cameras.

Various perception sensors are described herein in the context of image sensing perception sensors such as cameras, etc., to assist the driver while driving. In various embodiments, the system may utilize any one or more of these perception sensors and/or other types of sensors and cameras to collect data described herein. For example, such collected data may include data on any objects outside of the vehicle 202, including objects on the road. For example, such objects may include road surface features (e.g., bumps, potholes, etc.), environmental features (e.g., trash, alive or dead animals, rocks, boulders, etc.). Such objects may also include other vehicles or people. The data may include Lidar data and well as images. The images may be a continuous series of images, which may include video.

In various embodiments, the mirrors of the vehicle 202 and the perception sensors of the vehicle 202 may be referred to as client devices, which may communicate with the system 302. The mirrors may include electronics and other hardware that communicate the mirrors' positions to the system 302, and that enable the system 302 to control the mirrors. Such communications may be facilitated via any suitable communication network (not shown) such as a wired network, a Bluetooth network, a Wi-Fi network, etc., or any combination thereof.

For ease of illustration, FIG. 3 shows one block for the system 302 and several blocks for the perception sensors 304, 308, 312, and 316. These blocks may represent multiple systems and perception sensors. In other embodiments, environment 300 may not have all of the components shown and/or may have other elements including other types of elements instead of, or in addition to, those shown herein.

While system 302 performs embodiments described herein, in other embodiments, any suitable component or combination of components associated with system 302 or any suitable processor or processors associated with system 302 may facilitate performing the embodiments described herein.

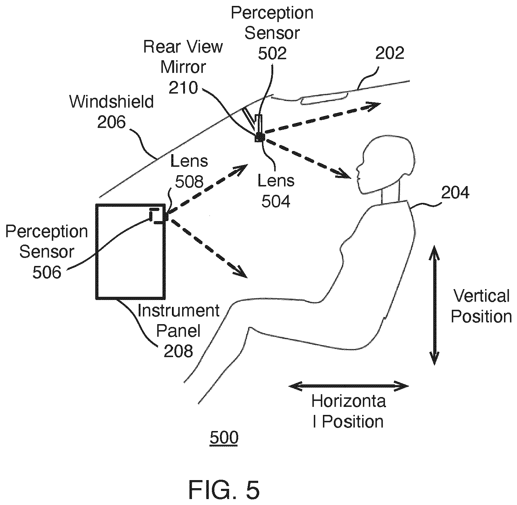

FIG. 4 is a flow chart for adjusting mirrors and perception sensors of a vehicle. Referring to both FIGS. 1, 2, 3, and 4, a method is initiated at block 402, where a system such as the system 302 detects an adjustment to a position of a driver occupying the driver's seat of the vehicle. For example, in various embodiments, the system 302 may detect an adjustment to the position of the driver's seat. In various embodiments, the system 302 may detect positions of the eyes of the driver, where the detecting of the adjustment to a position of the driver is based on the positions of the eyes of the driver. Example embodiments directed to the system 302 detecting positions of the eyes of the driver are described in more detail below in connection with FIG. 5.

In some embodiments, the system may enable the driver to stare or gaze into one of the mirrors to make preferred adjustments using key fob or other device. For example, the system may determine from the gaze of the driver that the driver intends to adjust the mirror. The system may then enable the driver to make changes manually to one or more of the mirrors using a key fob or other device. In some embodiments, the system may enable the driver to make changes manually to one or more of the mirrors using voice commands.

At block 404, the system 302 adjusts the mirrors and the perception sensors in response to the adjustment to the position of the driver. For example, the system 302 may adjust the mirrors and the perception sensors in response to the adjustment to the position of the driver's seat. The system utilizes the AI model to adjust the mirrors and perception sensors to optimal positions.

In various embodiments, the system may determine that the mirrors and the driver's seat are not aligned or optimal for the current driver, and the system may initiate an appropriate adjustment sequence. For example, the system may prompt the driver to look into one of the mirrors. Thereafter, the system may make appropriate adjustments to align the driver's seat, the side mirrors, the rear view mirror, and the perception sensors in order to optimize the vantage point of the driver, thereby providing enhanced views of the external environment for the driver for maximum visibility and safety.

Although the steps, operations, or computations may be presented in a specific order, the order may be changed in particular embodiments. Other orderings of the steps are possible, depending on the particular implementation. In some particular embodiments, multiple steps shown as sequential in this specification may be performed at the same time. Also, some embodiments may not have all of the steps shown and/or may have other steps instead of, or in addition to, those shown herein.

FIG. 5 is a side-view block diagram of an example environment 500 of the interior of a vehicle 202. Shown is the driver 204 in a seated position facing toward the windshield 206 and the instrument panel 208. As indicated above in connection with FIG. 2, the vehicle 202 enables the driver 204 to change his or her position and vantage point by changing the position of the driver's seat (FIG. 1) by moving the seat up or down to different vertical positions and/or frontward and backward to different horizontal positions, or any combination thereof. These changes in the position of the driver's seat thereby change the vantage point of the driver to a preferred vantage point.

As indicated herein, the vehicle may be equipped with perceptions sensors positioned or located on the exterior of the vehicle 202 and in the interior of the vehicle 202. The system may utilize some perceptions sensors in the interior of the vehicle 202 to view the external environment (e.g., through the windows). These perception sensors capture images of an external environment.

As shown in FIG. 5, the system may also utilize some perceptions sensors in the interior of the vehicle 202 to capture images of the driver 204. For example, shown is a perception sensor 502 located at rear view mirror 210, where the perception sensor 502 has a lens 504. The perception sensor 502 is positioned to view the eyes of the driver 204. As such, the perception sensor 502 captures images of the eyes of the driver. By capturing the images of the eyes of the driver, the system may determine the position or height of the eyes of the driver as well as the gaze of the eyes of the driver. The system may automatically adjust the mirrors and the perception sensors based on the height of the eyes and/or based on the gaze of the eyes of the driver. Such adjustments optimize the vantage point of the driver, thereby increasing or enhancing the driver's visibility of the external environment.

In the embodiment shown, the perception sensor 502 is integrated into the rear view mirror 210. In some embodiments, the perception sensor 502 may be mounted on the rear view mirror 210. Also shown is a perception sensor 506 with a lens 508 located at the instrument panel 208. In the embodiment shown, the perception sensor 506 is integrated into the instrument panel 208. In some embodiments, the perception sensor 506 may be mounted on the instrument panel 208. The perception sensor 506 is positioned to view the body of the driver 204. As such, the perception sensor 506 captures images of the body of the driver 204. By capturing the images of the body of the driver 204, the system may determine when the position of the driver 204 changes whether moving up or down, or forward or backward, or combinations thereof. Information associated with changes to the position of the body of the driver 204 may supplement the system when determining when to adjust the mirrors and the perception sensors and/or how much to adjust the mirrors and the perception sensors.

In various embodiments, the system utilizes the AI model, including any AI, machine learning, and computer vision techniques to track different portions or segments of the driver such as the eyes and body of the driver 204. For example, the system my track the gaze of the driver, the head movements of the driver, and the body movements of the driver. The system may then utilize the AI model to adjust the mirrors and perception sensors accordingly to angles that optimize the vantage point of the driver to better view the external environment while driving the vehicle in the forward direction and/or while backing up the vehicle in the rearward direction.

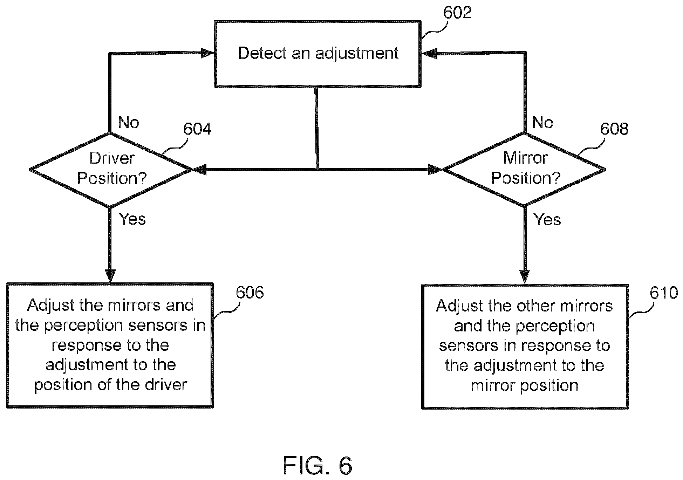

In an example use case, the system may determine that the head of the driver 204 is moving back and forth between gazing at the rear view and/or side view mirrors and looking toward the rear of the vehicle. This could be a scenario where the driver 204 is backing up the vehicle. The system automatically adjusts the angles of the mirrors and perception sensors to minimize blind spots or improve blind spot visibility, thereby optimizing the driver's view of the exterior environment. When the driver 204 completes the backing up of the vehicle, the system may reset the angles of the mirrors and perception sensors for normal driving (e.g., in the forward direction). The system achieves these adjustments automatically without further user action from the driver. Further embodiments directed to automatic adjustments in scenarios such as backing up a vehicle are described in more detail below in connection with FIG. 6.

FIG. 6 is a flow chart for adjusting mirrors and perception sensors of a vehicle. Referring to both FIGS. 1, 2, 3, and 6, a method is initiated at block 602, where a system such as the system 302 detects an adjustment. As described herein, the adjustment may be an adjustment to the position of the driver occupying the driver's seat, an adjustment to a position of one of the mirrors, etc.

At block 604, the system determines if the adjustment is to the position of the driver. As described above, the system may make such a determination about position of the driver based on a change in the position of the driver's seat, the position of the eyes of the driver, or the position of the body of the driver.

At block 606, if the system determines that the adjustment is to the position of the driver, the system automatically adjusts the mirrors and the perception sensors in response to and based on the adjustment to the position of the driver.

At block 608, the system determines if the adjustment is to the position of one or more of the mirrors. For example, when the driver is seated in the driver's seat, the driver may look into the rear view mirror and decide to adjust it for improved visibility. When the driver manually adjusts the rear view mirror, the system detects the adjustment. Similarly, the driver may look into one of the side view mirrors and decide to adjust one or both of the side mirrors for improved visibility. When the driver manually adjusts the rear view mirror or one or both of the side view mirrors either by hand or using electronic controls, the system detects the adjustment(s).

At block 610, if the system determines that the adjustment is to the position of one or more of the mirrors, the system automatically adjusts the other mirrors that were not manually adjusted by the driver. The system also automatically adjusts the perception sensors in response to the adjustment to the position of the driver. In various embodiments, the system adjusts the other mirrors and the perception sensors based on the adjustment of the one or more mirrors.

As indicated above, in various embodiments, the system may adjust the mirrors and the perception sensors in response to the gaze of the eyes of the driver. For example, the system may detect the gaze of the eyes of the driver. If the system determines that the driver is looking into the rear view mirror for longer than a predetermined amount of time (e.g., greater than 2 seconds, 4 seconds, etc.) based on a perception sensor tracking the gaze of the driver, the system may determine that the driver is backing up the vehicle. Similarly, the system may determine that the driver is looking at a view from an exterior perception sensor at the rear of the vehicle via the infotainment display on the instrument panel. Accordingly, the system may adjust the mirrors and the perception sensors is based on the gaze of the eyes of the driver.

In various embodiments, the system may combine detection of the gaze of the eyes of the driver with detection of the vehicle being set in reverse. For example, if the vehicle is in reverse, the system may track where the driver is looking based on the gaze of the driver's eyes, whether the driver is looking at the rear view mirror or at the side view mirrors or at a view of the rear exterior of the vehicle via the infotainment display on the instrument panel. Responsive to the system tracking the gaze of the driver when the driver is looking at the rear view mirror, looking at either of the side view mirrors, or looking at the perception sensor images on the infotainment display, the system adjusts the side view mirrors and perception sensors, accordingly, in order to assist the driver in backing up the vehicle safely.

In various embodiments, the system uses any suitable AI model, including any AI, machine learning, and computer vision techniques and eye vector technology to track the gaze of the driver. The system also uses the AI model, including any AI, machine learning, and computer vision techniques to track changes to the driver's seat and positions of the mirrors and to adjust the positions of the mirrors and the perception sensors to appropriate angles.

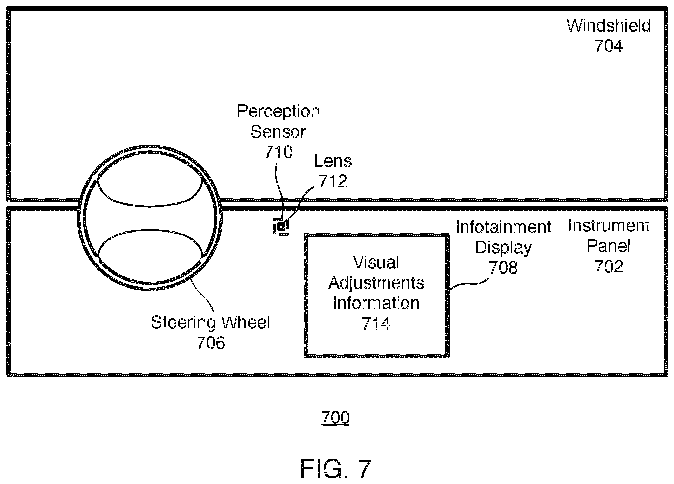

FIG. 7 is a block diagram of an environment 700, showing a perspective toward the front of a vehicle, such as the vehicle 202 of FIG. 2 and FIG. 3. Shown is a dashboard or instrument panel 702, a windshield 704, a steering wheel 706, and an infotainment display 708. Also shown is an example perception sensor 710 and a lens 712. The perception sensor 710 and the lens 712 may represent the perception sensor 506 and the lens 508 of FIG. 5, which the system may use to capture images of the body of the driver and/or images of the eyes and gaze of the driver.

In various embodiments, when the system automatically adjusts the mirrors and perception sensors, the system may display visual adjustments information 714 on the infotainment display 708. The visual adjustments information 714 includes the changes or visual adjustments that the system made to the mirrors and the perception sensors.

In various embodiments, the system may prompt the driver to confirm if the changes are acceptable to the driver. If acceptable, the system may leave the mirrors and the perception sensors as changed. If not acceptable, the system may detect if the driver manually adjusts the mirrors. The system may also prompt the driver to manually adjust the mirrors as desired. After the driver manually adjusts any one or more of the mirrors, the system may automatically adjust the other mirrors and the perception sensors accordingly. As such, the system may subsequently display the new changes on the infotainment display 708. This fine tuning may be an iterative process until the mirrors and the perception sensors are properly set as desired by the driver. Once set, the system may store the preferred settings in the database and update the database accordingly.

Embodiments described herein have numerous benefits. For example, embodiments increase the safety for a driver and passengers by automatically adjusting the mirrors and perception sensors of a vehicle in order to optimize the driver's view of the exterior of the vehicle. This may reduce typical blind spots by enabling the driver to better see the surroundings of the exterior of the vehicle as the driver drives the vehicle. Embodiments may also be applied to delivery vans or other cargo vehicles with no rear window or otherwise poor visibility.

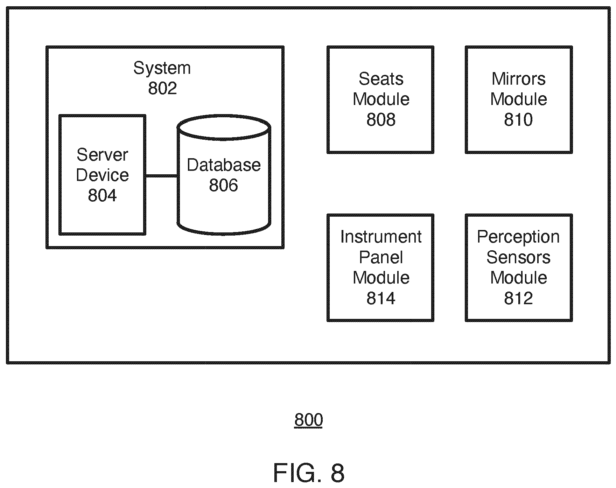

FIG. 8 is a block diagram of an example high-level architecture 800 for adjusting mirrors and perception sensors of a vehicle. Shown is a system 802, which may be used to implement the system 302 of FIG. 3. The system 802 includes a server device 804 and a database 806. Also shown is a seat module 808, a mirrors module 810, a perception sensors module 812, and an instrument panel module 814. The seat module 808, the mirrors module 810, the perception sensors module 812, and the instrument panel module 814 may be implemented using a combination of hardware and software. In various embodiments, the software may include and execute any suitable AI model, including any AI, machine learning, and computer vision techniques to track changes to the position of the driver, changes to the position of the driver's seat, and changes to the positions of the mirrors. The system may utilize the AI model to adjust the positions of the mirrors and the perception sensors to appropriate angles that maximize or optimize the vantage point of the driver, and thereby maximize the driver's view of the environment external to the vehicle.

The system 802 communicates data signals and control signals with the seat module 808, the mirrors module 810, the perception sensors module 812, and the instrument panel module 814 via the server device 804. The database 806 may be used to store various types of information such as preferred settings of the driver's seat, mirrors, and perception sensors, as well as AI training information, for example.

The system enables the seat module 808 to control the driver's seat and to track the position of the driver's seat (e.g., when the driver changes the position of the driver's seat). The system also enables the mirrors module 810 to control the mirrors of the vehicle and to track the positions of the mirrors (e.g., when the driver changes the position of any of the mirrors). The system also enables the perception sensors module 812 to control the perception sensors. The system also enables the instrument panel module 814 to control information displayed on the instrument panel and to enable the driver to interact with the infotainment display or system of the instrument panel.

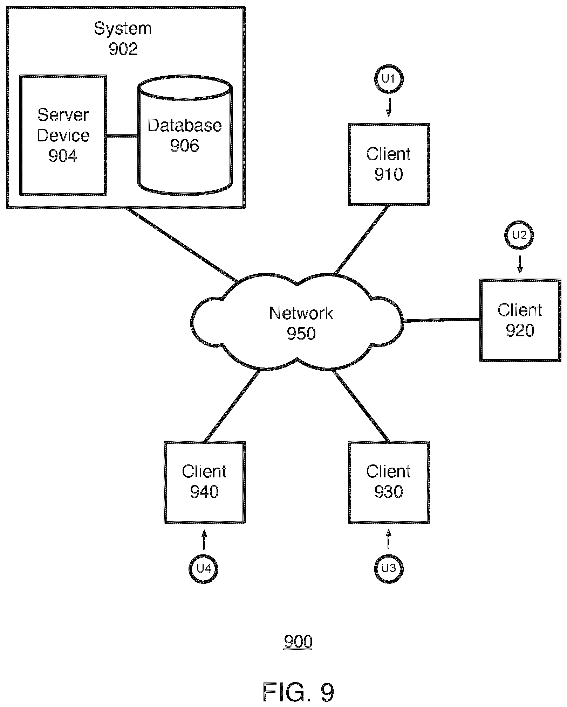

FIG. 9 is a block diagram of an example network environment 900 of the present disclosure. In some embodiments, network environment 900 includes a system 902, which includes a server device 904 and a database 906. In various embodiments, system 902 may be used to implement system 302 of FIG. 2 and/or system 802 of FIG. 8, as well as to perform embodiments described herein. Network environment 900 also includes client devices 910, 920, 930, and 940, which may communicate with system 902 and/or may communicate with each other directly or via system 902. The client devices 910, 920, 930, and 940 may be used to implement the driver's seat, the mirrors, and perception sensors, and the infotainment system. Network environment 900 also includes a network 950 through which system 902 and client devices 910, 920, 930, and 940 communicate. Network 950 may be any suitable communication network such as a Wi-Fi network, Bluetooth network, the Internet, etc.

For ease of illustration, FIG. 9 shows one block for each of system 902, server device 904, and network database 906, and shows four blocks for client devices 910, 920, 930, and 940. Blocks 902, 904, and 906 may represent multiple systems, server devices, and network databases. Also, there may be any number of client devices. In other embodiments, environment 900 may not have all of the components shown and/or may have other elements including other types of elements instead of, or in addition to, those shown herein.

While server device 904 of system 902 performs embodiments described herein, in other embodiments, any suitable component or combination of components associated with system 902 or any suitable processor or processors associated with system 902 may facilitate performing the embodiments described herein.

In the various embodiments described herein, a processor of system 902 and/or a processor of any client device 910, 920, 930, and 940 cause the elements described herein (e.g., information, etc.) to be displayed in a user interface on one or more display screens.

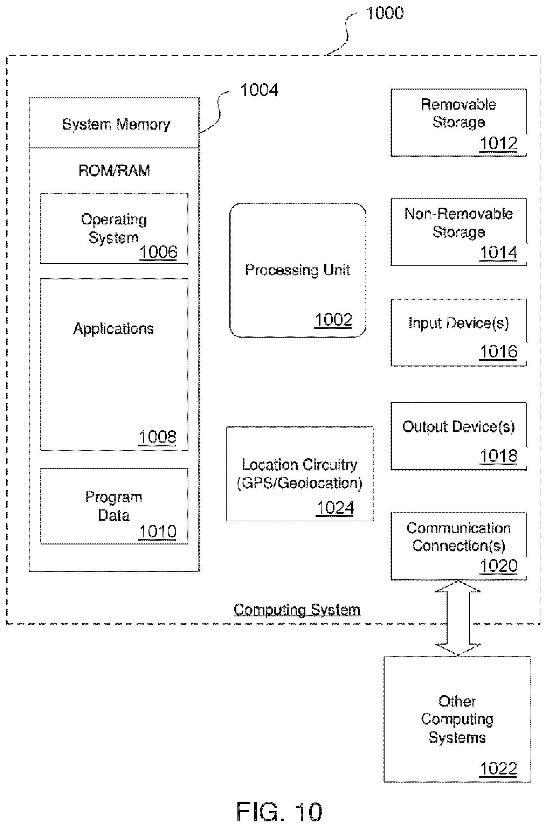

FIG. 10 is a block diagram of an example computing system 1000 of the present disclosure. The computing system 1000 may be used to implement the system 302 of FIG. 2 and/or system 802 of FIG. 8 and/or system 902 of FIG. 9, as well as to perform embodiments described herein.

The computing system 1000 typically includes at least one processing unit 1002 and a system memory 1004. Depending on the particular configuration and type of computing device, the system memory 1004 may be volatile such as random-access memory (RAM), non-volatile such as read-only memory (ROM), flash memory, and the like, or some combination of volatile memory and non-volatile memory. The system memory 1004 typically maintains an operating system 1006, one or more applications 1008, and program data 1010. The operating system 1006 may include any number of operating systems executable on desktops or portable devices including, but not limited to, Linux, Microsoft Windows^{®}, Apple OS^{®}, or Android^{®}.

The computing system 1000 may also have additional features or functionality. For example, the computing system 1000 may also include additional data storage devices (removable and/or non-removable) such as, for example, magnetic disks, optical disks, tape, or flash memory. Such additional storage may include removable storage 1012 and non-removable storage 1014. Computer storage media may include volatile and non-volatile, removable and non-removable media implemented in any method or technology for storage of information, such as computer-readable instructions, data structures, program modules or other data. The system memory 1004, the removable storage 1012, and the non-removable storage 1014 are all examples of computer storage media. Available types of computer storage media include, but are not limited to, RAM, ROM, EEPROM, flash memory (in both removable and non-removable forms) or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by the computing system 1000. Any such computer storage media may be part of the computing system 1000.

The computing system 1000 may also have input device(s) 1016 such as a keyboard, mouse, pen, voice input device, touchscreen input device, etc. Output device(s) 1018 such as a display, speakers, printer, short-range transceivers such as a Bluetooth transceiver, etc., may also be included. The computing system 1000 also may include one or more communication connections 1020 that allow the computing system 1000 to communicate with other computing systems 1022, such as over a wired or wireless network or via Bluetooth (a Bluetooth transceiver may be regarded as an input/output device and a communications connection). The one or more communication connections 1020 are an example of communication media. Available forms of communication media typically carry computer-readable instructions, data structures, program modules or other data in a modulated data signal such as a carrier wave or other transport mechanism and include any information delivery media. The term "modulated data signal" may include a signal that has one or more of its characteristics set or changed in such a manner as to encode information in the signal. By way of illustrative example only and not of limitation, communication media may include wired media such as a wired network or direct-wired connection, and wireless media such as acoustic, radio frequency (RF), infrared and other wireless media. The term computer-readable media as used herein includes both storage media and communication media.

The computing system 1000 may also include location circuitry 1024. In various embodiments, the location circuitry 1024 may include circuitry including global positioning system (GPS) circuitry and/or geolocation circuitry. The location circuitry 1024 may automatically discern its location based on relative positions to multiple GPS satellites and/or triangulation using cellular carrier network(s) and/or IEEE Standard 802.11 wireless (Wi-Fi) networks (collectively referred to as "geolocation services") to determine location based on multiple cellular communications facilities and/or multiple Wi-Fi networks. The location circuitry 1024, including GPS circuitry and/or geolocation circuitry, is frequently incorporated in smartphones and many other tablets or other portable devices. In various embodiments, computing system 1000 may not have all of the components shown and/or may have other elements including other types of components instead of, or in addition to, those shown herein.

Although the present disclosure is illustrated and described herein with reference to illustrative embodiments and specific examples provided, it will be readily apparent to those of ordinary skill in the art that other embodiments and examples may perform similar functions and/or achieve like results. All such equivalent embodiments and examples are within the spirit and scope of the present disclosure and are intended to be covered by the following non-limiting claims for all purposes.

## Claims

1. A mirror assembly for a vehicle (202), the mirror assembly comprising:
a mirror (210, 212) that provides visual driving assistance to a driver occupying a driver's seat (104) of the vehicle (202); and
a system (302) comprising one or more processors (1002) and logic encoded in one or more non-transitory computer-readable storage media for execution by the one or more processors (1002) and when executed operable to cause the one or more processors (1002) to perform operations comprising:
detecting an adjustment to a position of the driver (204); and
adjusting the mirror (210, 212) in response to the adjustment to the position of the driver (204).

2. The mirror assembly according to claim 1, wherein the logic when executed is further operable to cause the one or more processors (1002) to perform operations comprising:
detecting an adjustment to the position of the driver's seat (104); and
adjusting one or more of the mirror (210, 212) and a perception sensor (304, 308, 312, 316) in response to the adjustment to the position of the driver's seat (104).

3. The mirror assembly according to any of claims 1 and 2, wherein the logic when executed is further operable to cause the one or more processors (1002) to perform operations comprising detecting positions of eyes of the driver (204), and wherein the detecting of the adjustment to a position of the driver (204) is based on the positions of eyes of the driver (204).

4. The mirror assembly according to any of claims 2 and 3, wherein one or more of the perception sensors (304, 308, 312, 316) captures images of an external environment (102, 300).

5. The mirror assembly according to any of claims 2 to 4, wherein one or more of the perception sensors (502, 506, 710) captures images of eyes of the driver (204).

6. The mirror assembly according to any of claims 1 to 5, wherein the logic when executed is further operable to cause the one or more processors (1002) to perform operations comprising:
detecting an adjustment to the mirror (210, 212); and
adjusting one or more of another mirror (210, 212) and the perception sensor (304, 308, 312, 316) in response to the adjustment to the mirror (210, 212).

7. The mirror assembly according to any of claims 1 to 6, wherein the logic when executed is further operable to cause the one or more processors (1002) to perform operations comprising detecting a gaze of eyes of the driver (204), and wherein the adjusting of one or more of the mirror (210, 212) and the perception sensor (304, 308, 312, 316) is based on the gaze of eyes of the driver (204).

8. A vehicle (202) comprising a driver's seat (104) and the mirror assembly according to any of claims 1-7.

9. A computer-implemented method for adjusting mirrors (210, 212) and perception sensors (304, 308, 312, 316) of a vehicle (202), the method comprising:
detecting an adjustment to a position of a driver (204) occupying a driver's seat (104) of the vehicle (202) (step 402, 602); and
adjusting one or more of a mirror (210, 212) and a perception sensor (304, 308, 312, 316) in response to the adjustment to the position of the driver (204) (step 404, 606).

10. The method according to claim 9, wherein the method further comprises:
detecting an adjustment to the position of the driver's seat (104) (step 402, 604); and
adjusting the one or more of the mirror and the perception sensor in response to the adjustment to the position of the driver's seat (step 404, 606).

11. The method according to any of claims 9 and 10, wherein the method further comprises detecting positions of eyes of the driver (204), and wherein the detecting of the adjustment to a position of the driver (204) is based on the positions of eyes of the driver (204).

12. The method according to any of claims 9 to 11, wherein one or more of the perception sensors (304, 308, 312, 316) captures images of an external environment (102, 300).

13. The method according to any of claims 9 to 12, wherein one or more of the perception sensors (502, 506, 710) captures images of eyes of the driver (204).

14. The method according to any of claims 9 to 13, wherein the method further comprises detecting an adjustment to the mirror (210, 212) (step 608); and
adjusting one or more of another mirror (210, 212) and the perception sensor (304, 308, 312, 316) in response to the adjustment to the mirror (210, 212) (step 610).
